# EUROPÄISCHE PATENTSCHRIFT

(11) **EP 2 686 155 B1**
(45) Veröffentlichungstag und Bekanntmachung des Hinweises auf die Patenterteilung: **14.09.2016**
(21) Anmeldenummer: 12712234.9
(22) Anmeldetag: 12.03.2012
(51) Int. Cl.: B29C 65/08, B06B 3/00

(54) **SONOTRODE MIT BEARBEITUNGSKANAL**
SONOTRODE WITH PROCESSING CHANNEL
SONOTRODE PRÉSENTANT UN CANAL DE TRAITEMENT

(30) Priorität: 15.03.2011 DE 102011005536
(43) Veröffentlichungstag der Anmeldung: 22.01.2014
(73) Patentinhaber: Herrmann Ultraschalltechnik GmbH & Co. KG, 76307 Karlsbad (DE)
(72) Erfinder: ZENDLER, Stefan, 75334 Straubenhardt (DE)
(74) Vertreter: WSL Patentanwälte Partnerschaft mbB
(86) Internationale Anmeldenummer: PCT/EP2012/054283
(87) Internationale Veröffentlichungsnummer: WO 2012/123418

(56) Entgegenhaltungen:
- EP-A2- 0 468 125
- WO-A1-99/17893
- WO-A1-03/033179
- DE-A1- 1 597 010
- GB-A- 2 344 487

## Beschreibung

Die vorliegende Erfindung betrifft eine Ultraschallsonotrode für die Ultraschallbearbeitung mit einem Sonotrodengrundkörper und einer an einer Seite des Sonotrodengrundkörpers angeordneten Siegelfläche, die dafür vorgesehen ist, mit einem zu bearbeitenden Material in Kontakt zu treten.

Ultraschallsonotroden wie die hier beschriebene, finden ihren Einsatz in der Fertigungstechnik, beispielsweise beim Ultraschallschweißen von Kunststoffen.

Das Ultraschallschweißen ist ein Verfahren zum Fügen von Kunststoffen, bei dem mechanische Schwingungen oberhalb der Hörgrenze Verwendung finden. Der Frequenzbereich von Ultraschallschwingungen liegt in etwa zwischen 20 kHz und einem GHz. Mechanische Schwingungen im Ultraschallfrequenzbereich werden häufig mit Hilfe von piezoelektrischen Schallwandlern (Konvertern) aus elektrischer Energie erzeugt. Die resultierende mechanische Schwingungsenergie wird über eine mit dem Konverter, gegebenenfalls über ein Amplitudentransformationsstück (Booster), verbundene Sonotrode auf das zu bearbeitende Material aufgebracht. Die Sonotrode steht dabei in direktem Kontakt mit dem zu bearbeitenden Material und leitet die erzeugten mechanischen Schwingungen unter Druck an dieses weiter. Die Aufgabe des Amplitudentransformationsstücks besteht darin, die vom Konverter bereitgestellte Schwingungsamplitude den Erfordernissen des zu bearbeitenden Materials anzupassen und diese Schwingungen an die Sonotrode weiterzuleiten. Die Fläche der Sonotrode, die dafür vorgesehen ist, mit dem zu bearbeitenden Material in Kontakt zu treten, wird auch als Siegelfläche bezeichnet.

Eine Sonotrode ist somit Bestandteil eines im Betrieb schwingenden Gebildes, dass aus einem Konverter, gegebenenfalls einem Amplitudentransformationsstück und eben der Sonotrode besteht. Dieses schwingende Gebilde wird auch als Ultraschallschwingeinheit bezeichnet.

Um eine effektive Übertragung der Ultraschallschwingungen mittels einer Ultraschallschwingeinheit auf ein zu bearbeitendes Material sicherstellen zu können, ist es notwendig, das die Ultraschallschwingeinheit in Resonanz gebracht wird. Die Ultraschallschwingeinheit weist abhängig von ihrem Aufbau im allgemeinen eine Vielzahl unterschiedlicher Eigenfrequenzen auf. Eine resonante Schwingung der Ultraschallschwingeinheit kann nur hervorgerufen werden, wenn der Konverter eine Eigenfrequenz der Ultraschallschwingeinheit erzeugt. Aus diesem Grunde müssen Konverter und Ultraschallschwingeinheit aufeinander abgestimmt sein.

Aufgrund der Dämpfung, die sich in jedem realen System findet, ist präziserweise zwischen Resonanzfrequenz und Eigenfrequenz zu unterscheiden. Der Literatur folgend werden in der vorliegenden Patentschrift allerdings der Einfachheit halber die Begriffe Resonanzfrequenz und Eigenfrequenz synonym benutzt.

Bei der Ultraschallschweißung wird das zu bearbeitende Material im Allgemeinen zwischen der Sonotrode und einem entsprechenden nicht zur Ultraschallschwingeinheit gehörenden Gegenwerkzeug (Amboss) eingebracht. Die Utraschallenergie wird über die Siegelfläche von der Sonotrode auf das zu bearbeitenden Material übertragen. Hierbei kommt es zu einer Umwandlung von Ultraschallschwingungen in Reibungsenergie, wodurch Wärme erzeugt wird, die zum Plastifizieren des bearbeiteten Materials führt. Ursache für diese thermische Plastifizierung sind Grenzflächen- und Molekularreibungen.

Für die Ultraschallbearbeitung von großflächigen Materialabschnitten benötigt man entsprechend große Siegelflächen. Um diese Siegelflächen zum Schwingen anzuregen, sind entsprechend groß dimensionierte Sonotroden erforderlich. Optimale Schweißergebnisse sind nur bei möglichst gleichmäßigen Schwingungsamplituden über die gesamte Siegelfläche zu erzielen. Materialbedingte Werkstoffparamter wie die Querkontraktion verursachen eine ungleichförmige Verformung and der Siegelfläche, die bei zu großen Siegelflächen das Schweißergebnis negativ beeinflussen.

Daher ist es vorteilhaft, in den Sonotrodengrundkörper Ausnehmungen einzubringen. Diese Ausnehmungen können für eine gleichmäßigere Schwingungsamplitude an der Siegelfläche sorgen. Die Ausnehmungen bringen jedoch eine meist unerwünschte Kerbwirkung mit sich, die die Lebensdauer der Sonotrode verringern kann.

Häufig weist der Sonotrodengrundkörper eine oder mehrere sich jeweils entlang einer Schlitzachse durch den Sonotrodengrundkörper erstreckende Schlitze auf. Alternativ dazu ist es auch möglich, statt Durchgangsschlitze lediglich Nuten in den Sonotrodengrundkörper einzubringen. Dies ist jedoch in der Regel weniger vorteilhaft. Im folgenden wird daher der lediglich der Begriff des "Schlitzes" verwendet, obgleich prinzipiell auch Nuten möglich wären.

Unter einer Schlitzachse wird diejenige Achse verstanden, entlang derer sich der Schlitz in den Sonotrodengrundkörper hinein erstreckt. Dabei ist die Achse im Zentrum des Schlitzes angeordnet.

Insbesondere dann, wenn die Siegelfläche in beiden Dimensionen, d.h. in ihrer Länge und in ihrer Breite, sehr groß ausgebildet ist, ist es bereits üblich, dass in die Sonotrode in zwei zueinander senkrecht stehenden Richtungen Schlitze hat, die sich innerhalb des Sonotrodengrundkörpers schneiden.

Mit anderen Worten sind die Schlitze derart ausgebildet, dass ein Durchgangskanal durch den Sonotrodengrundkörper von dem einen Durchgangsschlitz in den anderen Durchgangsschlitz gebildet wird. Der Durchgangskanal weist somit einen ersten Abschnitt, der von dem einen Durchgangsschlitz gebildet wird, einen zweiten Abschnitt, der von dem anderen Durchgangsschlitz gebildet wird, sowie einen Schnittabschnitt, der den ersten und den zweiten Abschnitt verbindet und sowohl von dem einen Durchgangsschlitz als auch von dem anderen Durchgangsschlitz gebildet wird, auf.

Üblicherweise werden die Schlitze eingefräst, so dass sich im Bereich der Kreuzungspunkte, d.h. dort wo der erste Abschnitt, der zweite Abschnitt und der Schnittabschnitt aufeinandertreffen, Kanten ausgebildet werden.

Die WO 99/17893 A1 offenbart ein hohles Vibrationshorn, weiches einen äußeren Zylinder und einen inneren Schaft aufweist, welche über eine Scheibe miteinander verbunden sind. Der Schaft besitzt ein Axialeingangsende, er empfängt Vibrationsenergie an dem Axialeingangsende und überträgt Vibrationsenergie auf den Zylinder. Der Zylinder ist hohl und weist eine innere Fläche, eine äußere Fläche und erste und zweite gegenüberliegende Endflächen auf. Die zweite Endfläche dient als Schweißfläche, die Vibrationsenergie auf einen Gegenstand überträgt. Außerdem zeigt die WO 99/17893 A1 in Abgrenzung zu diesem hohlen Vibrationshorn ein geschlitztes Ultraschallhorn.
Im Bereich scharfer Kanten, Löcher oder Änderungen der Querschnittsfläche von Objekten kommt es aber zu einer noch stärker ausgeprägten Kerbwirkung, d.h. zu lokalen Spannungskonzentrationen. Derartige lokale Spannungskonzentrationen in Folge von starken lokalen Zug-, Scherungs- oder Torsionsbelastungen können eine lokale Überbeanspruchung des Materials zur Folge haben. Dies kann zu nachhaltigen Materialbeschädigungen führen. In Folge dieser lokalen Spannungskonzentrationen verringert sich demzufolge einerseits die Lebensdauer der Sonotrode, andererseits die maximal mögliche Schwingungsamplitude, die mit der Sonotrode verwirklicht werden kann.

Um die scharfen Kanten zu beseitigen, ist bereits versucht worden, die Kante manuell abzuschleifen, in dem ein entsprechendes Schleifwerkzeug von dem ersten Abschnitt über den Schnittabschnitt in den zweiten Abschnitt geführt wird. Diese Nachbearbeitung ist jedoch sehr aufwendig.

Es wäre daher sehr wünschenswert, eine Ausführungsform für eine Ultraschallsonotrode zur Verfügung zu haben, bei der einerseits die Sonotrodenmasse in Folge von eingebrachten Kanälen in angemessener Weise reduziert werden kann, andererseits aber eine Verringerung der Lebensdauer bzw. der maximalen möglichen Schwingungsamplitude der Sonotrode aufgrund der Kerbenwirkung in Folge der sich schneidenden Kanäle weitestgehend verhindert wird.

Diese Aufgabe wird erfindungsgemäß dadurch gelöst, dass im Sonotrodengrundkörper ein Bearbeitungskanal vorgesehen ist, welcher sich entlang einer Bearbeitungskanalachse von einer Seitenfläche des Sonotrodengrundkörpers bis zu dem Durchgangskanal erstreckt, wobei der eine Durchgangsschlitz eine Schlitzbreite d₁, der andere Durchgangsschlitz eine Schlitzbreite d₂ und der Bearbeitungskanal eine Breite oder einen Durchmesser d₃ hat, wobei (*d*₃)² *>* (*d*₁)² *+* (*d*₂)²*.* Die Bearbeitungsachse ist in einem Querschnitt senkrecht zur Bearbeitungsachse im wesentlichen im Zentrum des Durchgangskanal angeordnet.

Ein derartiger Bearbeitungskanal ermöglicht einen leichten und direkten Zugang zum Schnittabschnitt der Ausnehmungen im Sonotrodengrundkörper. Über diesen Bearbeitungskanal können die Schnittbereiche in angemessener Weise bearbeitet werden und somit gegebenenfalls vorhandene scharfe Kanten oder andere ungünstige geometrische Gegebenheiten, die zu einer erhöhten Kerbwirkung beitragen, abgetragen werden. Dies kann beispielsweise mittels Bürsten oder Polieren erfolgen. Eine solche Verringerung der Kerbwirkung ermöglicht entweder für eine vorgegebene Amplitude eine Erhöhung der Lebensdauer der Sonotrode oder bei gleichbleibender Lebensdauer eine Erhöhung der Amplitude.

Es hat sich überraschenderweise gezeigt, dass die zusätzlichen Bearbeitungskanäle das Schwingverhalten der Sonotrode praktisch nicht beeinflussen. Es zeigt sich nur eine minimale Verschiebung der Resonanzfrequenz und eine leichte Veränderung der Amplitudentransformation.

In einer bevorzugten Ausführungsform ist vorgesehen, dass sich der Bearbeitungskanal bis zu dem Schnittabschnitt des Durchgangskanals erstreckt. Hierdurch wird gewährleistet, dass ein leichter Zugang zum gesamten Schnittabschnitt des Durchgangskanals durch den Bearbeitungskanal zur Verfügung steht. Dies ermöglicht die Abtragung scharfkantiger Ausformungen innerhalb des gesamten Schnittabschnitts des Durchgangskanals.

In einer weiteren bevorzugten Ausführungsform ist vorgesehen, dass sich auch die Schlitzachsen der zwei Schlitze schneiden. Durch das Schneiden dieser Achsen wird sichergestellt, dass der sich bildende Durchgangskanal symmetrisch ist und somit ein möglichst gleichmäßiges Schwingungsmuster innerhalb der Sonotrode ermöglicht wird.

Für das Einbringen der Durchgangsschlitze ist es von Vorteil, wenn die beiden Schlitzachsen senkrecht zueinander ausgerichtet sind. Dadurch kann sichergestellt werden, dass alte Schnittwinkel innerhalb des Sonotrodengrundkörpers 90° betragen. Dies trägt zu einer Verringerung der Kerbwirkung bei, die um so größer ist, je spitzer die Winkel sind. Je nach Geometrie der Siegelfläche kann eine solche Anordnung der Schlitze auch für die Ausbildung einer gleichmäßigen Schwingungsamplitude von Vorteil sein.

Weiterhin ist es von Vorteil, wenn die Bearbeitungskanalachse senkrecht zu einer oder beiden Schlitzachsen ausgebildet ist.

Schneiden sich die Bearbeitungskanalachse und die beiden Schlitzachsen in einem Punkt, stellt dies einen möglichst zentralen und somit vollständigen Zugang zum gesamten Schnittabschnitt des Durchgangskanals sicher. Dies erleichtert ein symmetrisches Abtragen scharfer Kanten im Schnittabschnitt, wodurch unnötige einseitige Materialabtragungen vermieden werden können. Darüber hinaus erhöht eine derart symmetrische Anordnung die gesamte Symmetrie der Ausnehmungen innerhalb des Sonotrodengrundkörpers. Eine daraus resultierende symmetrisch gleichmäßige Ausgestaltung der voll massiven Sonotrodenteilabschnitte gewährleistet ein maximal reguläres Schwingungsmuster innerhalb der Sonotrode.

Zum Zweck einer Verringerung des Bearbeitungsaufwands beim Einbringen der Bearbeitungskanäle hat es sich in der Praxis als vorteilhaft erwiesen, dass der eine Durchgangsschlitz eine Schlitzbreite d₁, der andere Durchgangsschlitz eine Schlitzbreite d₂ und der Bearbeitungskanal eine Breite bzw. einen Durchmesser d₃ aufweisen, wobei gilt (*d*₃)² > (*d*₁)² + (*d*₂)² . Somit ist es möglich, beispielsweise im Zuge einer einzigen zentral zum Mittelpunkt des Schnittabschnitts ausgerichteten Bohrung sämtliche scharfe Kanten im Schnittabschnitt abzutragen. Eine derart ausgestalteter Bearbeitungskanal ermöglicht aufgrund seines Durchmessers d₃ einerseits einen leichten Zugang zum Schnittabschnitt des Durchgangskanals, andererseits wird der Umfang der Abtragung auf ein Minimum reduziert, was zu einer Verringerung der Auswirkungen dieser Abtragung auf das Schwingungsverhalten der Sonotrode führt.

Zum Zwecke der oben beschriebenen Abtragung von scharfen Kanten im Bereich des Schnittabschnitts ist es hilfreich, wenn sich der Bearbeitungskanal bis in den Schnittabschnitt hinein und besonders bevorzugt im Wesentlichen bis zum gegenüberliegenden Ende des Schnittabschnitts erstreckt. Eine solche Ausdehnung des Bearbeitungskanals durch den gesamten Schnittabschnitt des Durchgangskanals stellt sowohl den leichten Zugang zum kompletten Schnittabschnitt sicher, als auch die Möglichkeit einer kompletten Abtragung nachteiliger scharfer Kanten im gesamten Schnittabschnitt durch das Einbringen eines einzigen Bearbeitungskanals. Mit anderen Worten erfolgt die notwendige Bearbeitung der scharfen Kanten bereits durch das Bohren des Bearbeitungskanals, da die Bohrung nicht nur so tief ausgeführt wird, bis der Durchgangskanal erreicht wird, sondern bis in den Schnittabschnitt hinein, so dass durch das Bohren die scharfen Kanten entfernt werden. Es ist somit mit einem einzigen automatisierten Arbeitsschritt, nämlich das Bohren des Bearbeitungskanal, möglich, den Schnittabschnitt zu bearbeiten und dadurch die Kerbwirkung zu reduzieren.

Eine weitere vorteilhafte Ausführungsform ist dadurch gekennzeichnet, dass sich mehrere Bearbeitungskanäle entlang der jeweiligen Bearbeitungskanalachsen bis hin zu dem Durchgangskanal erstrecken. In einem solchen Fall von mehreren Bearbeitungskanälen ist es möglich, dass für die unterschiedlichen in Bezug auf die Kerbwirkung problematischen Bereiche des Schnittabschnitts jeweils ein eigener Bearbeitungskanal Verwendung findet. Dies ermöglicht eine optimale Anpassung der einzelnen Bearbeitungskanäle an die jeweiligen Bereiche des Schnittabschnitts. Zugleich kann aufgrund der erhöhten Zahl der Bearbeitungskanäle ein überflüssiges Abtragen von Sonotrodenmaterial vermieden werden, so dass die Verschiebung der Eigenfrequenz der Sonotrode noch weiter verringert wird.

In einer weiteren bevorzugten Ausführungsform ist vorgesehen, dass die beiden Schlitze gleiche Querschnitte senkrecht zur jeweiligen Schlitzachse aufweisen.

Weitere Vorteile, Merkmale und Anwendungsmöglichkeiten der vorliegenden Erfindung werden deutlich anhand der folgenden Beschreibung einiger bevorzugter Ausführungsformen sowie der dazugehörigen Figuren. Es zeigen:
- Figur 1: eine Ausführungsform einer Sonotrode des Standes der Technik ohne Bearbeitungskanal,
- Figur 2: eine erfindungsgemäße Ausführungsform einer Sonotrode mit Bearbeitungskanal,
- Figur 3a: einen Querschnitt durch den Sonotrodengrundkörper aus Figur 1 parallel zur Siegelfläche,
- Figur 3b: eine Detailansicht eines Schnittabschnittes aus Figur 3a,
- Figur 4a: einen Querschnitt durch den Sonotrodengrundkörper der Sonotrode aus Figur 2,
- Figur 4b: eine Detailansicht eines Schnittabschnitts aus Figur 2a,
- Figur 5a: einen Querschnitt durch den zweiten Kanal senkrecht zum ersten Kanal des Sonotrodengrundkörpers aus Figur 1,
- Figur 5b: eine Detailansicht des Endes eines Schnittabschnitts aus Figur 5a,
- Figur 6a: einen Querschnitt durch den zweiten Kanal senkrecht zum ersten Kanal des Sonotrodengrundkörpers aus Figur 2, und
- Figur 6b: eine Detailansicht des Endes des Schnittabschnitts aus Figur 6a.

Es versteht sich, dass sowohl die vorstehende allgemeine Beschreibung als auch die folgende genaue Beschreibung lediglich beispielhaft illustrierend sind und eine weitere Erläuterung der beanspruchten Erfindung bereitstellen sollen.

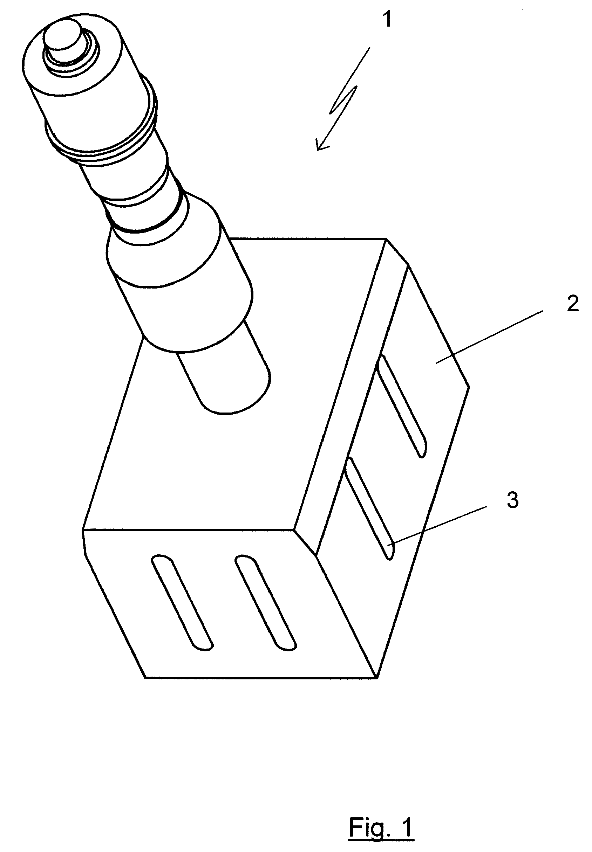

In Figur 1 ist eine Ultraschallsonotrode 1 zu sehen, die einen im Wesentlichen quaderförmig ausgebildeten Sonotrodengrundkörper 2 umfasst. Dieser Sonotrodengrundkörper 2 weist vier Durchgangsschlitze 3 auf. Dabei schneidet jeder Durchgangsschlitz 3 die beiden senkrecht hierzu verlaufenden Durchgangsschlitze 3.

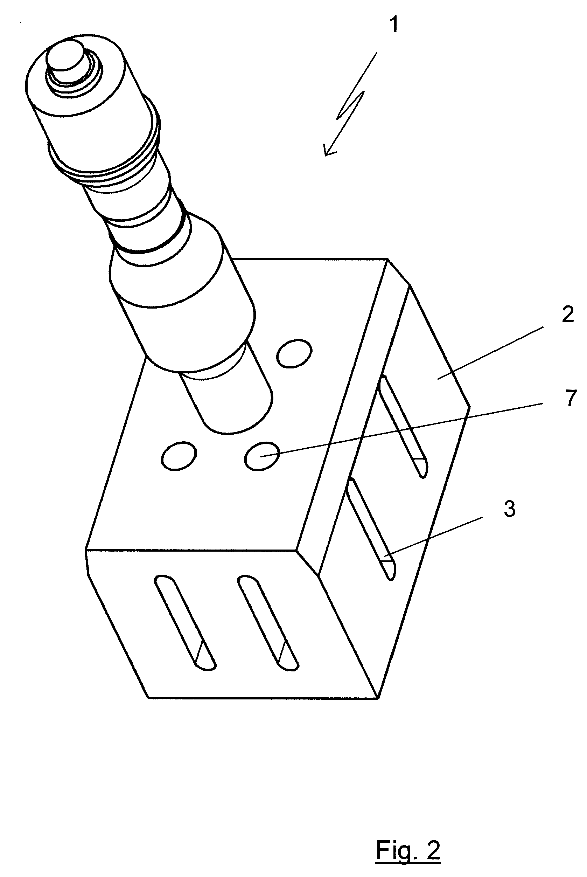

In Figur 2 ist eine erste Ausführungsform der Erfindung zu sehen. Die Sonotrode 1 ist der in Figur 1 gezeigten Sonotrode sehr ähnlich. Allerdings sind hier zusätzlich Bearbeitungskanäle 7 vorgesehen, die sich von der der Siegelfläche gegenüberliegenden Seite des Sonotrodengrundkörpers senkrecht in Richtung der Siegelfläche erstrecken. Grundsätzlich wäre es möglich, dass sich die Bearbeitungskanäle bis durch die Siegelfläche hindurch erstrecken. Allerdings ist dies in der gezeigten bevorzugten Ausführungsform nicht der Fall.

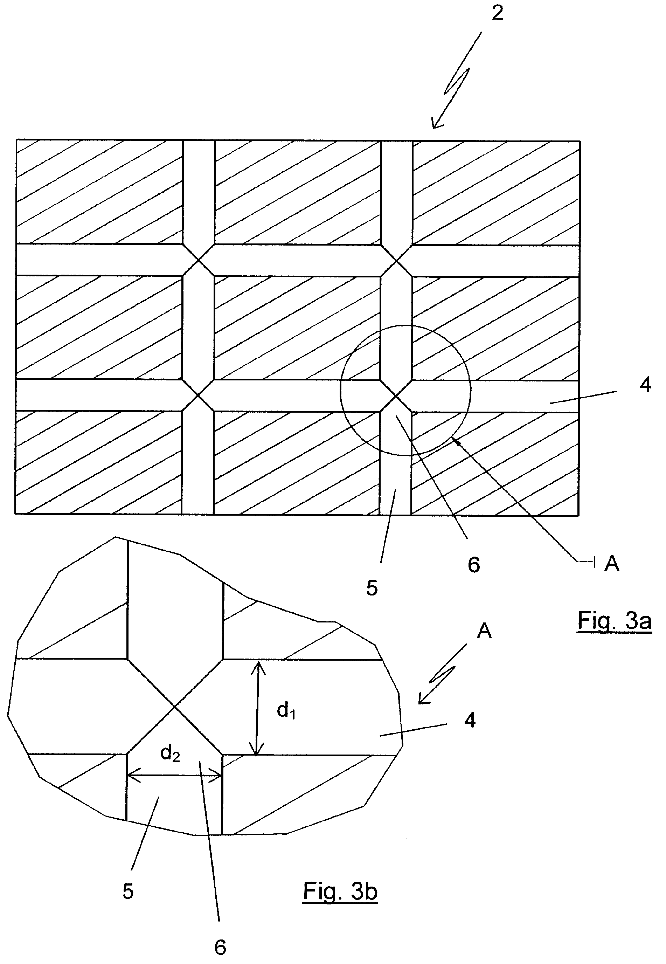

Figur 3a zeigt einen Querschnitt des Sonotrodengrundkörpers 2 parallel zur Siegelfläche der Sonotrode. Die senkrecht zueinander verlaufenden Schlitze 3 schneiden sich, so dass sich ein Durchgangskanal bildet, welcher durch einen ersten Abschnitt 4 des ersten Schlitzes, einen zweiten Abschnitt 5 des zweiten Schlitzes und einen Schnittabschnitt 6, der sowohl von dem ersten Schlitz als auch von dem zweiten Schlitz gebildet wird.

Insgesamt werden durch die vier Schlitze vier Schnittabschnitte gebildet.

Figur 3b zeigt eine Detailansicht des Schnittabschnitts 6 aus Figur 3a. In dieser Detailansicht A sind vier Kanten im Schnittabschnitt 6 der beiden Durchgangsschlitze mit den Breiten d₁ und d₂ zu sehen.

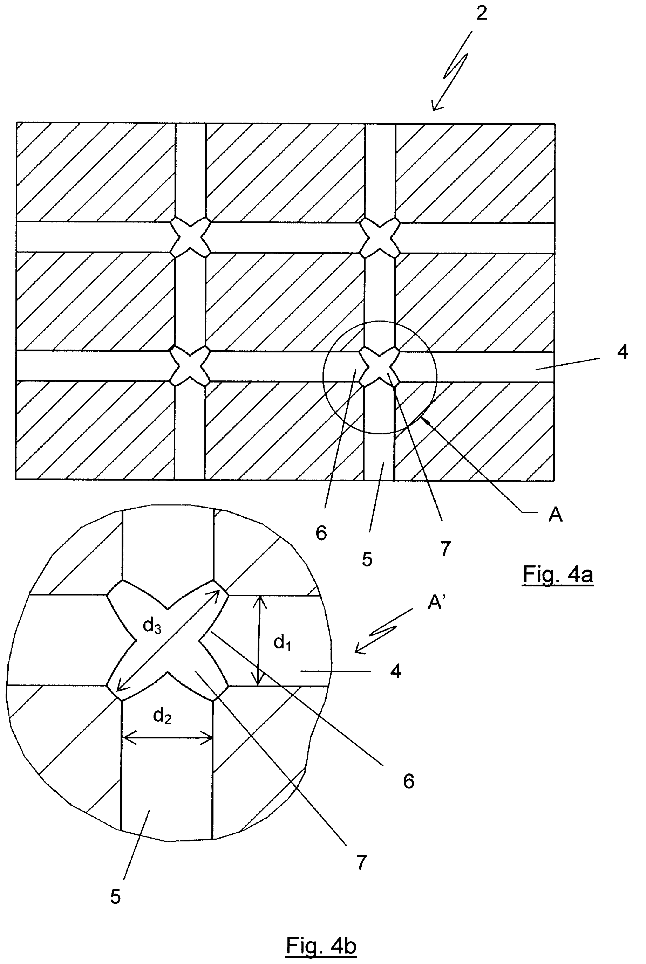

Figur 4a stellt einen entsprechenden Querschnitt durch die in Figur 2 dargestellte Sonotrode dar. Auch in diesem Fall sind vier sich im rechten Winkel schneidende Durchgangsschlitze 3 zu sehen. Durch die zusätzlichen Bearbeitungskanäle 7 ist der Schnittbereich 6 jedoch anders ausgestaltet, wie insbesondere der in Figur 4b gezeigten vergrößerten Darstellung zu entnehmen ist. Durch die Bearbeitungskanäle 7 mit dem Durchmesser d₃ werden die 90°-Kanten, die sich an der Kante zwischen ersten und zweitem Schlitz ausbilden, entfernt, so dass die Kerbwirkung reduziert wird.

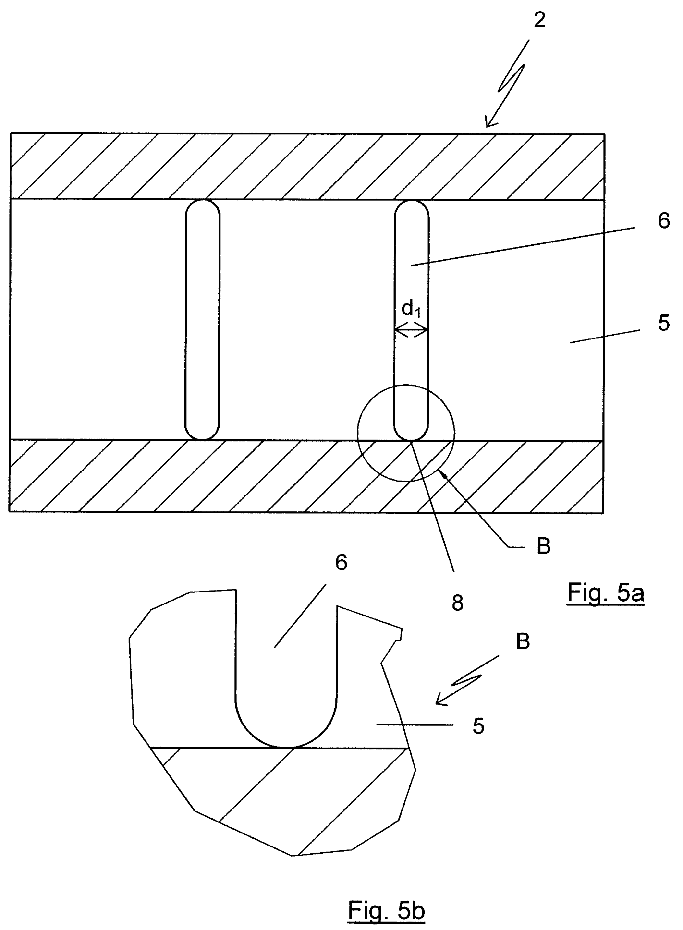

In Figur 5a ist ein weiterer Querschnitt durch den Sonotrodengrundkörper der in Figur 1 dargestellten Sonotrode 1 zu sehen. Der hier dargestellte Querschnitt verläuft durch den Schnittabschnitt senkrecht zu dem Schlitz mit der Breite d₁. Das abgerundete Ende des einen Schnittabschnitts 8 ist in Figur 5b im Detail gezeigt.

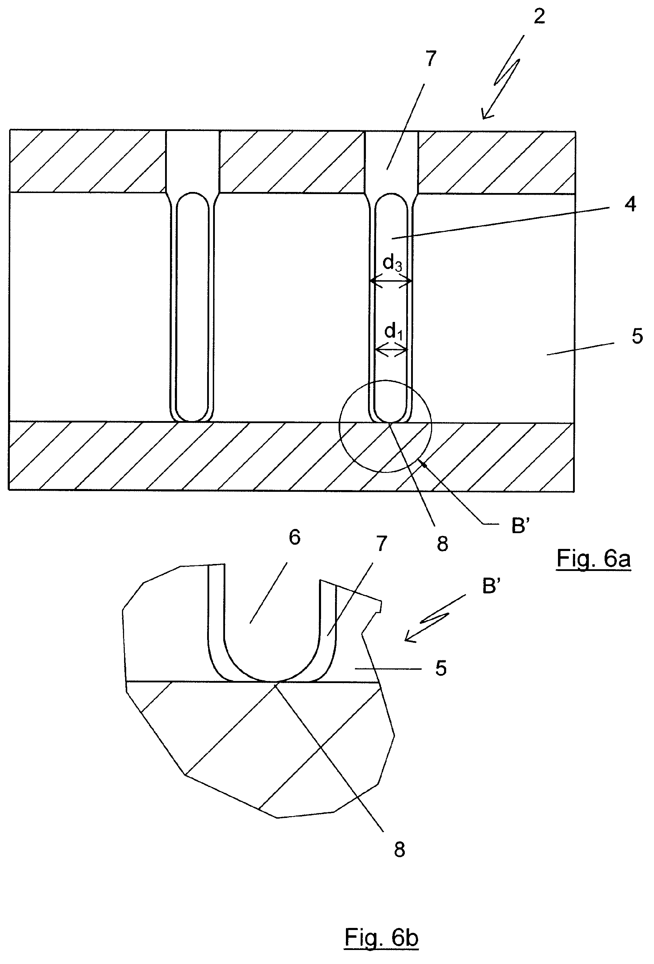

Figur 6a zeigt einen entsprechenden Querschnitt durch den Sonotrodengrundkörper der Figur 2. Deutlich zu erkennen ist, dass der Schnittabschnitt durch die Bearbeitungskanäle 7 mit dem Durchmesser d₃ vergrößert wird, so dass die scharfen Kanten entfernt und die Kerbwirkung reduziert wird.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale und Merkmalsgruppen kombinierbar sind, soweit dies nicht ausdrücklich ausgeschlossen wurde oder technische Gegebenheiten derartige Kombination unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Bezugszeichen in den Ansprüchen sind nicht als Beschränkung des Schutzbereichs gedacht.

### Bezugszeichenliste

- 1: Sonotrode
- 2: Sonotrodengrundkörper
- 3: Durchgangsschlitze
- 4: Erster Abschnitt
- 5: Zweiter Abschnitt
- 6: Schnittabschnitt
- 7: Bearbeitungskanal
- 8: Ende des Schnittabschnitts
- d₁: Schlitzbreite
- d₂: Schlitzbreite
- d₃: Breite des Bearbeitungskanals
- A: Detailansicht des Schnittabschnitts
- A': Detailansicht des Schnittabschnitts
- B: Detailansicht des Endes des Schnittabschnitts
- B': Detailansicht des Endes des Schnittabschnitts

## Patentansprüche

1. Sonotrode (1) für die Ultraschallbearbeitung mit einem Sonotrodengrundkörper (2) und einer an einer Seite des Sonotrodengrundkörpers (2) angeordneten Siegelfläche, die dafür vorgesehen ist, mit einem zu siegelnden Material in Kontakt zu treten, wobei der Sonotrodengrundkörper (2) zwei sich jeweils entlang einer Schlitzachse in oder durch den Sonotrodengrundkörper (2) erstreckende Durchgangsschlitze (3) aufweist, die im wesentlichen symmetrisch um die Schlitzachsen angeordnet sind, wobei sich die Durchgangsschlitze (3) derart schneiden, dass ein Durchgangskanal durch den Sonotrodengrundkörper (2) von dem einen Durchgangsschlitz (3) in den anderen Durchgangsschlitz (3) gebildet wird, so dass der Durchgangskanal einen ersten Abschnitt (4), der von dem einen Durchgangsschlitz (3) gebildet wird, einen zweiten Abschnitt (5), der von dem anderen Durchgangsschlitz (3) gebildet wird, und einen Schnittabschnitt (6), der den ersten und den zweiten Abschnitt (4, 5) verbindet und sowohl von dem einen Durchgangsschlitz (3) als auch von dem anderen Durchgangsschlitz (3) gebildet wird, aufweist, wobei ein Bearbeitungskanal (7) vorgesehen ist, welcher sich entlang einer Bearbeitungskanalachse von einer Seitenfläche des Sonotrodengrundkörpers (2) bis zu dem Durchgangskanal erstreckt, **dadurch gekennzeichnet, dass** der eine Durchgangsschlitz (3) eine Schlitzbreite d₁, der andere Durchgangsschlitz (3) eine Schlitzbreite d₂ und der Bearbeitungskanal (7) eine Breite oder einen Durchmesser d₃ hat, wobei (*d₃*)² > (*d*₁)² + (*d*₂)²*.*

2. Sonotrode (1) nach Anspruch 1, **dadurch gekennzeichnet, dass** der Bearbeitungskanal (7) sich bis zu dem Schnittabschnitt (6) des Durchgangskanals erstreckt.

3. Sonotrode (1) nach einem der Ansprüche 1 bis 2, **dadurch gekennzeichnet, dass** die beiden Schlitzachsen senkrecht zueinander ausgerichtet sind.

4. Sonotrode (1) nach einem der Ansprüche 1 bis 3, **dadurch gekennzeichnet, dass** die Bearbeitungskanalachse senkrecht zu einer oder beiden Schlitzachsen ausgebildet ist, wobei sich die Bearbeitungskanalachse und die beiden Schlitzachsen vorzugsweise in einem Punkt schneiden.

5. Sonotrode (1) nach einem der Ansprüche 1 bis 4, **dadurch gekennzeichnet, dass** der Bearbeitungskanal (7) sich bis in den Schnittabschnitt (6) hinein und besonders bevorzugt im wesentlichen bis zum gegenüberliegenden Ende (8) des Schnittabschnitts (6) erstreckt.

6. Sonotrode (1) nach einem der Ansprüche 1 bis 5, **dadurch gekennzeichnet, dass** mehrere Bearbeitungskanäle (7) sich entlang jeweiliger Bearbeitungskanalachsen bis zu dem Durchgangskanal erstrecken.

7. Sonotrode (1) nach Anspruch 6, **dadurch gekennzeichnet, dass** die Bearbeitungskanalachsen der mehreren Bearbeitungskanäle (7) im wesentlichen symmetrisch um den Schnittpunkt der beiden Schlitzachsen angeordnet sind.

8. Sonotrode (1) nach einem der Ansprüche 1 bis 7, **dadurch gekennzeichnet, dass** die beiden Durchgangsschlitze (3) gleiche Querschnitte senkrecht zu ihrer Schlitzachse aufweisen.

9. Sonotrode (1) nach einem der Ansprüche 1 bis 8, **dadurch gekennzeichnet, dass** der Bearbeitungskanal (7) einen kreisförmigen Querschnitt senkrecht zur Bearbeitungskanalachse aufweist.

## Claims

1. A sonotrode (1) for ultrasonic processing comprising a sonotrode main body (2) and a sealing surface which is arranged at one side of the sonotrode main body (2) and which is intended to come into contact with a material to be sealed, wherein the sonotrode main body (2) has two through slits (3) which respectively extend along a slit axis in or through the sonotrode main body (2) and which are arranged substantially symmetrically around the slit axes, wherein the through slits (3) intersect in such a way that a through passage is formed through the sonotrode main body (2) from the one through slit (3) into the other through slit (3) so that the through passage has a first portion (4) formed by the one through slit (3), a second portion (5) formed by the other through slit (3) and an intersection portion (6) connecting the first and the second portions (4, 5) and formed both by the one through slit (3) and also by the other through slit (3), wherein there is provided a machining passage (7) extending along a machining passage axis from a side surface of the sonotrode main body (2) to the through passage, **characterized in that** the one through slit (3) is of a slit width d₁, the other through slit (3) is of a slit width d₂ and the machining passage (7) is of a width or a diameter d₃, wherein (d₃)² > (d₁)² + (d₂)².

2. A sonotrode (1) as set forth in claim 1 **characterised in that** the machining passage (7) extends to the intersection portion (6) of the through passage.

3. A sonotrode (1) as set forth in one of claims 1 and 2 **characterised in that** the two slit axes are oriented in mutually perpendicular relationship.

4. A sonotrode (1) as set forth in one of claims 1 through 3 **characterised in that** the machining passage axis is perpendicular to one or both slit axes, wherein the machining passage axis and the two slit axes preferably intersect at a point.

5. A sonotrode (1) as set forth in one of claims 1 through 4 **characterised in that** the machining passage (7) extends into the intersection portion (6) and particularly preferably extends substantially to the opposite end (8) of the intersection portion (6).

6. A sonotrode (1) as set forth in one of claims 1 through 5 **characterised in that** a plurality of machining passages (7) extend along respective machining passage axes to the through passage.

7. A sonotrode (1) as set forth in claim 6 **characterised in that** the machining passage axes of the plurality of machining passages (7) are arranged substantially symmetrically around the intersection point of the two slit axes.

8. A sonotrode (1) as set forth in one of claims 1 through 7 **characterised in that** the two through slits (3) are of identical cross-sections perpendicularly to their slit axis.

9. A sonotrode (1) as set forth in one of claims 1 through 8 **characterised in that** the machining passage (7) is of a circular cross-section perpendicularly to the machining passage axis.

## Revendications

1. Sonotrode (1) pour usinage par ultrasons, comprenant un corps de base de sonotrode (2) et une surface de scellage disposée sur un côté du corps de base de sonotrode (2), qui est prévue pour entrer en contact avec un matériau à sceller, le corps de base de sonotrode (2) comportant deux fentes de passage (3) s'étendant respectivement le long d'un axe de fente dans ou à travers le corps de base de sonotrode (2), lesquelles fentes sont disposées sensiblement symétriquement autour des axes de fentes, les fentes de passage (3) se coupant de manière à former un canal de passage à travers le corps de base de sonotrode (2) depuis l'une des fentes de passage (3) jusque dans l'autre fente de passage (3) de telle sorte que le canal de passage présente un premier segment (4) qui est formé par une fente de passage (3), un second segment (5) qui est formé par l'autre fente de passage (3), et un segment d'intersection (6) qui relie le premier et le second segments (4, 5) et est formé à la fois par une fente de passage (3) et par l'autre fente de passage (3), un canal de traitement (7) étant prévu, qui s'étend le long d'un axe de canal de traitement depuis une surface latérale du corps de base de sonotrode (2) jusqu'au canal de passage,
**caractérisée en ce que** l'une des fentes de passage (3) a une largeur de fente d₁, l'autre fente de passage (3) a une largeur de fente d₂ et le canal de traitement (7) a une largeur ou un diamètre d₃, où (d₃)² > (d₁)² + (d₂)².

2. Sonotrode (1) selon la revendication 1, **caractérisée en ce que** le canal de traitement (7) s'étend jusqu'au segment d'intersection (6) du canal de passage.

3. Sonotrode (1) selon l'une des revendications 1 à 2, **caractérisée en ce que** les deux axes de fente sont orientés perpendiculairement l'un à l'autre.

4. Sonotrode (1) selon l'une des revendications 1 à 3, **caractérisée en ce que** l'axe de canal de traitement est réalisé de manière perpendiculaire à l'un ou aux deux axes de fentes, l'axe de canal de traitement et les deux axes de fentes se coupant de préférence en un point.

5. Sonotrode (1) selon l'une des revendications 1 à 4, **caractérisée en ce que** le canal de traitement (7) s'étend jusque dans le segment d'intersection (6) et de façon particulièrement préférée sensiblement jusqu'à l'extrémité opposée (8) du segment d'intersection (6).

6. Sonotrode (1) selon l'une des revendications 1 à 5, **caractérisée en ce que** plusieurs canaux de traitement (7) s'étendent le long d'axes de canal de traitement respectifs jusqu'au canal de passage.

7. Sonotrode (1) selon la revendication 6, **caractérisée en ce que** les axes de canaux de traitement des différents canaux de traitement (7) sont disposés sensiblement symétriquement autour du point d'intersection des deux axes de fentes.

8. Sonotrode (1) selon l'une des revendications 1 à 7, **caractérisée en ce que** les deux fentes de passage (3) ont des sections transversales identiques perpendiculairement à leur axe de fente.

9. Sonotrode (1) selon l'une des revendications 1 à 8, **caractérisée en ce que** le canal de traitement (7) a une section transversale circulaire perpendiculairement à l'axe du canal de traitement.
